# EUROPÄISCHE PATENTSCHRIFT

(11) **EP 2 691 451 B1**
(45) Veröffentlichungstag und Bekanntmachung des Hinweises auf die Patenterteilung: **01.07.2015**
(21) Anmeldenummer: 12709655.0
(22) Anmeldetag: 22.03.2012
(51) Int. Cl.: C08K 5/00

(54) **ZWEIKOMPONENTEN-BESCHICHTUNGSMASSEN**
TWO-COMPONENT COATING COMPOSITIONS
MATIÈRES DE REVÊTEMENT À DEUX COMPOSANTS

(30) Priorität: 31.03.2011 EP 11160593
(43) Veröffentlichungstag der Anmeldung: 05.02.2014
(73) Patentinhaber: BASF SE, 67056 Ludwigshafen (DE)
(72) Erfinder: BRYM, Markus, 67117 Limburgerhof (DE); RÖSCH, Christine, 55127 Mainz (DE); HAAF, Christina, 69502 Hemsbach (DE); STEINBRECHER, Angelika, Maria, Cluj-Napoca (RO); SCHÄFER, Harald, 68219 Mannheim (DE); ELIZALDE, Oihana, Charlotte NC 28279 (US)
(86) Internationale Anmeldenummer: PCT/EP2012/055091
(87) Internationale Veröffentlichungsnummer: WO 2012/130718

(56) Entgegenhaltungen:
- EP-A1- 1 526 150
- WO-A2-2006/022899
- DE-A1-102009 007 624
- FR-A1- 2 861 738
- GB-A- 2 444 364

## Beschreibung

Zweikomponenten-Beschichtungsmassen enthalten in der Regel ein Bindemittel und einen Vernetzer, wobei es sich häufig um Polyisocyanate oder Melamin-Formaldehyd-Harze handelt. Erstere sind häufig sensibilisierend und letztere enthalten einen Restgehalt an toxischem Formaldehyd, bzw. dieser wird aus den Melamin-Formaldehyd-Harzen abgespalten.

Es besteht somit ein Interesse an Zweikomponenten-Beschichtungsmassen, die über einen alternativen Härtungsmechanismus verfügen.

EP 1088 A1 beschreibt die Herstellung Glycerincarbonat(meth)acrylat-haltiger Copolymere allgemein, sowie deren Verwendung für Pigmente oder als Lacken. Es wird lediglich ein Hinweis auf Vernetzungsmittel in allgemeinster Form gegeben, jedoch kein detaillierte Offenbarung zur Vernetzung.

EP 272664 A2 beschreibt Copolymere enthaltend Glycerincarbonat(meth)acrylat und hydroxygruppentragende Monomere, die zur Härtung mit Polyisocyanaten oder Melamin-Formaldehyd-Harzen befähigt sind.

Die hauptsächliche Härtung findet über eine Reaktion zwischen Isocyanat- und Hydroxygruppen statt, wenngleich eine untergeordnete Härtung über Amine, entstehend durch Hydrolyse überschüssigen Isocyanats, erwähnt ist.

EP358358 B1 beschreibt Mischungen aus Epoxy-, Carbonat- oder Acetoacetoxygruppen tragenden acrylischen Copolymeren mit Mono-, Di- oder Polyaminen, die primäre und/oder sekundäre Amingruppen aufweisen können, als Pigmentdispergiermittel, mit dem die Pigmentpartikel eine geringere Agglomeration zeigen. Die so erhaltenen Pigmentpasten werden dann in Beschichtungsmassen eingearbeitet.

EP 737726 A1 beschreibt einkomponentige Mischungen aus Copolymeren für eine Härtung per Michael-Addition, die Carbonatgruppen entweder als isolierte Komponenten, beispielsweise in Form von Ethylencarbonat, oder in einpolymerisierter Form enthalten.

Die Carbonatgruppen enthaltende Komponente fungiert dabei als Co-Katalysator für die als Katalysator eingesetzten Oniumsalze und nimmt selber nicht an der Härtung teil.

WO 03/048215 A1 beschreibt die Umsetzung von Copolymeren mit cyclischen Carbonatgruppen mit Aminen. Die Umsetzung dient dazu, reaktive Stellen für eine nachfolgende Derivatisierung des Copolymers per Pfropfreaktion zu schaffen und bewirkt keine Vernetzung von Copolymeren. Ähnliche Systeme werden beschrieben in WO 2004/060935 A1 und WO 2004/060945 A1.

BE 1009543 beschreibt die Kombination aus carbonatgruppenhaltigen Oligomeren oder Polymeren mit einem amingruppenhaltigen Vernetzer.

Bei dem amingruppenhaltigen Vernetzer handelt es sich um eine spezielle Struktur, die mindestens zwei primäre Amingruppen in β-, γ- oder δ-Position zu einer tertiären Amingruppe.

Als Polyamine werden explizit offenbart (Seite 3, Zeilen 7 bis 10): N,N,N',N'-Tetrakis (3'-amino-propyl)-1,4-diaminobutan, Tris-(2'-aminoethyl) amin und Tris-(aminopropyl) amin.

Die Kombination wird in Beschichtungen mit gutem Glanz, guter Acetonbeständigkeit und guter Aushärtung und Härte sowie Blockfestigkeit eingesetzt.

Dies hat den Nachteil, daß in den fertigen Beschichtungen recht elektronenreiche tertiäre Amingruppen verbleiben, die zu einer Vergilbung der Beschichtungen führen.

Der vorliegenden Erfindung lag die Aufgabe zugrunde, Beschichtungsmassen zur Verfügung zu stellen, die nach einem alternativen Vernetzungsverfahren gehärtet werden können. Die Beschichtungsmassen sollten variabel zusammengesetzt werden können, so daß die Topfzeit und Eigenschaften der Beschichtung breit variiert werden können. Die Beschichtungsmassen sollen Beschichtungen ergeben, die in mindestens einem der Parameter Härte und/oder Flexibilität eine Verbesserung gegenüber dem Stand der Technik ergeben. Für den Einsatz in Außenanwendungen sollen bevorzugte Beschichtungsmassen zusätzlich eine geringere Vergilbung zeigen.

Die Aufgabe wurde gelöst durch Zweikomponenten-Beschichtungsmassen, enthaltend
- mindestens ein durch radikalische Copolymerisierung erhältliches Copolymer (A), das mindestens eine cyclische Carbonatgruppe trägt,
- mindestens ein Di- oder Polyamin (B), welches mindestens zwei Amingruppen aufweist, ausgewählt aus der Gruppe bestehend aus primären und sekundären Amingruppen,
- optional mindestens ein Lösungsmittel (C),
- optional mindestens ein Pigment (D), und
- optional mindestens ein Additiv (E)
wobei die Verbindung (B) einen Anteil an tertiären Amingruppen, bezogen auf die Gesamtmenge an primären, sekundären und tertiären Amingruppen, von weniger als 20 % aufweist.

Ein weiterer Gegenstand der vorliegenden Erfindung ist die Verwendung derartiger Zweikomponenten-Beschichtungsmassen zum Beschichten von Substraten.

Das Copolymer (A) ist bevorzugt erhältlich durch radikalische Polymerisation eines Monomerengemisches aus
(a1) mindestens einem mindestens eine cyclische Carbonatgruppe aufweisenden (Meth)acrylat,
(a2) mindestens einem (Cyclo)alkyl(meth)acrylat,
(a3) mindestens einem vinylaromatischen Monomer,
(a4) optional mindestens einem Hydroxyalkyl(meth)acrylat, und
(a5) optional mindestens einem säuregruppenhaltigen Monomer.

Es können in untergeordneten Mengen andere Monomere in das Copolymer (A) eingebaut werden, bevorzugt werden jedoch keine weiteren Monomere als die oben angeführten Monomere (a1) bis (a5) eingesetzt.

Bei diesen Monomeren handelt es sich im einzelnen um folgende Verbindungen:

### (a1) Mindestens ein mindestens eine cyclische Carbonatgruppe aufweisendes (Meth)acrylat:

Das Monomer (a1) kann beispielsweise ein bis drei, bevorzugt ein oder zwei und besonders bevorzugt genau eine cyclische Carbonatgruppe aufweisen. Es kann sich um ein Gemisch mehrerer Monomere, beispielsweise zwei bis vier, bevorzugt zwei oder drei und besonders bevorzugt zweier Monomere handeln, bevorzugt ist jedoch der Einsatz genau eines Monomers (a1).

Unter einer "cyclischen Carbonatgruppe" werden erfindungsgemäß bevorzugt 2-Oxo-1,3-dioxolan- oder 2-Oxo-1,3-dioxanstrukturen, bevorzugt 2-Oxo-1,3-dioxolanstrukturen verstanden.

Bei den Monomeren (a1) handelt es sich bevorzugt um (2-Oxo-1,3-dioxolan-4-yl)methyl acrylat (GCA) oder (2-Oxo-1,3-dioxolan-4-yl)methyl methacrylat (GCMA), 2-Oxo-[1,3]dioxolan-4-carbonsäure acryloyloxymethyl ester, 2-Oxo-[1,3]dioxolan-4-carbonsäure 2-methyl-acryloyloxymethyl ester, bevorzugt um (2-Oxo-1,3-dioxolan-4-yl)methyl acrylat (GCA).

### (a2) Mindestens ein (Cyclo)alkyl(meth)acrylat:

Das Monomer (a2) kann ein Gemisch mehrerer Monomere, beispielsweise zwei bis vier, bevorzugt zwei oder drei und besonders bevorzugt zweier Monomere sein, bevorzugt ist jedoch der Einsatz genau eines Monomers (a2).

Mit dem Begriff (Cyclo)alkyl wird "Cycloalkyl" und "Alkyl" zusammengefaßt, bevorzugt Alkyl.

Beispiele für (Cyclo)alkyl(meth)acrylate sind Cycloalkyl(meth)acrylate, deren Cycloalkylrest aus einem drei- bis zwölfgliedrigen Ring gebildet werden, bevorzugt einem fünf- bis zwölfgliedrigen Ring und besonders bevorzugt einem fünf- oder sechsgliedrigen Ring.

Insbesondere sind bevorzugt Cyclopentyl(meth)acrylat, Cyclohexyl(meth)acrylat, Cyclooctyl-(meth)acrylat und Cyclododecyl(meth)acrylat, besonders bevorzugt Cyclopentyl(meth)acrylat, Cyclohexyl(meth)acrylat und Cyclododecyl(meth)acrylat, ganz besonders bevorzugt Cyclopentyl(meth)acrylat und Cyclohexyl(meth)acrylat und insbesondere Cyclohexyl(meth)acrylat, wobei die Acrylate jeweils gegenüber den Methacrylaten bevorzugt sind.

Beispiele für Alkyl(meth)acrylate sind Alkyl(meth)acrylate, deren Alkylrest ein bis 20 Kohlenstoffatome umfaßt, bevorzugt ein bis 12 und besonders bevorzugt ein bis 8.

Insbesondere sind bevorzugt Methyl(meth)acrylat, Ethyl(meth)acrylat, iso-Propyl(meth)acrylat, n-Propyl(meth)acrylat, n-Butyl(meth)acrylat, iso-Butyl(meth)acrylat, sek-Butyl(meth)acrylat, tert.-Butyl(meth)acrylat, n-Hexyl(meth)acrylat, n-Heptyl(meth)acrylat, n-Octyl(meth)acrylat, n-Decyl-(meth)acrylat, n-Dodecyl(meth)acrylat, n-Tetradecyl(meth)acrylat, n-Hexadecyl(meth)acrylat, n-Heptadecyl(meth)acrylat), n-Octadecyl(meth)acrylat, n-Eicosyl(meth)acrylat, 2-Ethylhexyl-(meth)acrylat und 2-Propylheptyl(meth)acrylat, besonders bevorzugt sind Methyl(meth)acrylat, Ethyl(meth)acrylat, n-Butyl(meth)acrylat, tert.-Butyl(meth)acrylat und 2-Ethylhexyl(meth)acrylat, ganz besonders bevorzugt sind Methylacrylat, Methylmethacrylat, Ethylacrylat, n-Butylacrylat, tert.-Butylacrylat und 2-Ethylhexylacrylat und ganz besonders bevorzugt n-Butylacrylat und 2-Ethylhexylacrylat.

### (a3) Mindestens ein vinylaromatisches Monomer:

Das Monomer (a3) kann ein Gemisch mehrerer Monomere, beispielsweise zwei bis vier, bevorzugt zwei oder drei und besonders bevorzugt zweier Monomere sein, bevorzugt ist jedoch der Einsatz genau eines Monomers (a3).

Bevorzugte Monomere (a3) sind Styrol, Vinyltoluol, Vinylnaphthalin, α- und p-Methylstyrol, α-Butylstyrol, 4-n-Butylstyrol, 4-n-Decylstyrol, besonders bevorzugt Styrol und alpha-Methylstyrol, ganz besonders bevorzugt ist Styrol.

### (a4) Optional mindestens ein Hydroxyalkyl(meth)acrylat:

Das Monomer (a4) ist optional und kann ein Gemisch mehrerer Monomere, beispielsweise zwei bis vier, bevorzugt zwei oder drei und besonders bevorzugt zweier Monomere sein, bevorzugt ist jedoch der optionale Einsatz genau eines Monomers (a4).

Bevorzugte Monomere (a4) sind 2-Hydroxyethyl(meth)acrylat, 2-Hydroxypropyl(meth)acrylat, 3-Hydroxypropyl(meth)acrylat und 4-Hydroxybutyl(meth)acrylat, besonders bevorzugt sind 2-Hydroxyethylacrylat, 2-Hydroxyethylmethacrylat, 2-Hydroxypropylacrylat, 2-Hydroxypropylmethacrylat und 4-Hydroxybutylacrylat, ganz besonders bevorzugt sind 2-Hydroxyethylacrylat, 2-Hydroxyethylmethacrylat und 2-Hydroxypropylacrylat.

### (a5) Optional mindestens ein säuregruppenhaltiges Monomer:

Das Monomer (a5) ist optional und kann ein Gemisch mehrerer Monomere, beispielsweise zwei bis vier, bevorzugt zwei oder drei und besonders bevorzugt zweier Monomere sein, bevorzugt ist jedoch der optionale Einsatz genau eines Monomers (a5).

Bevorzugte Monomere (a5) sind Acrylsäure, Methacrylsäure, Crotonsäure, Itaconsäure, Maleinsäure oder Fumarsäure, besonders bevorzugt sind Acrylsäure und Methacrylsäure und ganz besonders bevorzugt ist Acrylsäure.

Die Säuren können optional mit Ammonium, Kalium und/oder Natrium zumindest teilweise neutralisiert sein.

Andere Monomere, die in untergeordneten Mengen in das Copolymer (A) eingebaut werden können, sind beispielsweise vernetzende Monomere, wie
- innere Vernetzer, also solche Verbindungen, die mindestens zwei radikalisch polymerisierbare Doppelbindungen aufweisen, bevorzugt 2 bis 6, besonders bevorzugt 2 bis 4, ganz besonders bevorzugt 2 bis 3 und insbesondere genau 2. Beispielhaft erwähnt seien Allylacrylat, Allylmethacrylat, Methallylacrylat, Methallylmethacrylat, Di- und Poly(meth)-acrylate 1,2-, 1,3- und 1,4-Butandioldiacrylat, 1,2- und 1,3-Propylenglykol(meth)acrylat, 1,6-Hexandioldi(meth)acrylat, 1,2-Ethylenglykoldi(meth)acrylat, Neopentylglykoldi(meth)-acrylat, Diethylenglykoldi(meth)acrylat, Triethylenglykoldi(meth)acrylat, Tetraethylenglykoldi(meth)acrylat, Trimethylolpropantri(meth)acrylat, Trimethylolethantri(meth)acrylat, Pentaerythroltri- und -tetra(meth)acrylat sowie Divinylbenzol.
- äußere Vernetzer, also Verbindungen, die zu einer Vernetzung des Polymers (A) nach dessen Herstellung führen. Beispielhaft erwähnt seien Glycidyl(meth)acrylat, 2'-(Acetylacetoxy) ethyl methacrylat, Acetoacetoxyethyl acrylat, Acetoacetoxypropyl methacrylat, Acetoacetoxybutyl methacrylat, Methacrylsäure 2'-(2"-oxo-imidazolidin-1 "-yl)-ethyl ester (Ureido ethyl methacrylat), Diacetonacrylamid (DAAM) und Diacetonmethacrylamid.

Das Monomerengemisch (a) kann bevorzugt wie folgt zusammengesetzt sein
(a1) mindestens 5, bevorzugt mindestens 15 und besonders bevorzugt mindestens 20 Gew% und bis zu 50, bevorzugt bis zu 45 und besonders bevorzugt bis zu 40 Gew% mindestens eines mindestens eine cyclische Carbonatgruppe aufweisenden (Meth)acrylats,
(a2) mindestens 20 Gew%, bevorzugt mindestens 30 und besonders bevorzugt mindestens 50 Gew% und bis zu 90, bevorzugt bis zu 85 und besonders bevorzugt bis zu 80 Gew% mindestens eines (Cyclo)alkyl(meth)acrylats,
(a3) 0 bis 50 Gew%, bevorzugt 0 bis 40 und besonders bevorzugt 0 bis 35 Gew% mindestens eines vinylaromatischen Monomers,
(a4) optional bis zu 20 Gew%, bevorzugt bis zu 15 Gew% und besonders bevorzugt 0 bis 10 Gew% mindestens eines Hydroxyalkyl(meth)acrylats und
(a5) 0 bis 5 Gew%, bevorzugt 0 bis 3, besonders bevorzugt mindestens 0 bis 1 Gew% mindestens eines säuregruppenhaltigen Monomers,
andere Monomere sind optional und in der Regel in Mengen von nicht mehr als 5 Gew%, bevorzugt nicht mehr als 3 Gew% und besonders bevorzugt nicht anwesend,
mit der Maßgabe, daß die Summe immer 100 Gew% beträgt.

Das Copolymer (A) weist in der Regel eine Glasübergangstemperatur (Tg) von -70 bis 140 °C, bevorzugt 10 bis 100 °C, besonders bevorzugt 15 bis 80 °C und ganz besonders bevorzugt 20 bis 60 °C.

Eine Berechnung der Glasübergangstemperatur nach bekannten Methoden auf Basis tabellierter Werte für bestimmte Monomere, wie beispielsweise nach Fox, führt in der Regel zu guten Näherungswerten, jedoch wird die Glasübergangstemperatur Glasübergangstemperatur in dieser Schrift bevorzugt bestimmt gemäß ASTM-Vorschrift D3418-03 über Differential Scanning Calorimetry (DSC), bevorzugt mit einer Aufheizrate von 10 °C/min.

Monomere (a4) sind bevorzugt dann anwesend, wenn die erfindungsgemäßen Beschichtungsmassen zur Härtung mit Vernetzern reagiert werden sollen, beispielsweise Polyisocyanaten oder Melamin-Formaldehyd-Harzen. Dies stellt jedoch lediglich eine optionale Möglichkeit zur Härtung der erfindungsgemäßen Beschichtungsmassen dar und ist daher weniger bevorzugt. In diesem Fall beträgt die OH-Zahl der Polymere (A) bevorzugt von 50 bis 150 mg KOH/g, bevorzugt von 70 bis 130 und besonders bevorzugt um 100 mg KOH/g.

Bevorzugte Copolymere (A) weisen einen Gehalt von cyclischen Carbonatgruppen von mindestens 0,2 mol cyclischen Carbonatgruppen pro kg Copolymer (A) auf, besonders bevorzugt mindestens 0,3 mol/kg, ganz besonders bevorzugt mindestens 0,5 und insbesondere mindestens 0,75 mol/kg.

In der Regel ist ein Gehalt an cyclischen Carbonatgruppen bis zu 3 mol/kg ausreichend, bevorzugt bis zu 2,8, besonders bevorzugt bis zu 2,5 und ganz besonders bevorzugt bis zu 2,2 mol/kg.

Das gewichtsmittlere Molekulargewicht Mw des Polymers (A) beträgt von 1.500 bis 200.000 g/mol, bevorzugt 3.000 bis 200.000 g/mol, besonders bevorzugt von 4.000 bis 100.000, ganz besonders bevorzugt von 5.000 bis 50.000 und insbesondere von 7.500 bis 30.000.

In dieser Schrift wird das gewichtsmittlere Molekulargewicht Mw, wenn nicht anders angegeben, bestimmt über eine Größenausschlußchromatographie (size exclusion chromatography, SEC) mit Tetrahydrofuran + 0,1 Gew% Trifluoressigsäure als Eluent bei einer Durchflußgeschwindigkeit von 1 ml/min und 35 °C Säulentemperatur. Die Probe wird im Eluenten auf eine Konzentration von 2 mg/ml verdünnt und 100 µl davon injiziert, nachdem die Probelösung über ein 0,2 µm Filter (Sartorius Minisart SRP 25) zur Entfernung eines etwaigen Gelanteils filtriert wurde. Als Säulen wurden drei Säulen mit einem inneren Durchmesser von 7,5 mm kombiniert wie folgt: 5 cm Vorsäule (Plgel 10µ Guard Vorsäule) gefolgt von zwei 30 cm Trennsäulen (jeweils Plgel 10µ Mixed B). Die Detektion erfolgte mittels eines Differentialrefraktometers Agilent 1100, UV-Photometer Agilent 1100 VWD, PSS SLD7000-BI-MwA (UV/254 nm/Agilent). Die Kalibrierung erfolgte mit eng verteiltem Polystyrol-Standards der Fa. Polymer Laboratories mit Molekulargewichten von M = 580 bis M = 7.500.000, sowie Hexylbenzol (M = 162). Die Werte außerhalb des Elutionsbereichs wurden extrapoliert.

Die Polydispersität Mw/Mn beträgt in der Regel nicht mehr als 50, bevorzugt nicht mehr als 30 und besonders bevorzugt nicht mehr als 15.

Durch die der Molekulargewichtsbestimmung vorgeschalteten Filtration wird ein etwaiger Gelanteil des Polymeren entfernt, so daß sich die angegebenen Werte auf den Solanteil beziehen.

Der unlösliche Anteil des Polymeren kann bestimmt werden durch vierstündige Extraktion mit 2-Methoxyethanol in einer Soxhlet-Apparatur und, nach Trocknung des Rückstandes bis zur Gewichtskonstanz, Wägung des verbliebenen Rückstandes. Der unlösliche Anteil des Polymeren beträgt bevorzugt nicht mehr als 10 Gew%, bevorzugt nicht mehr als 5 Gew%.

Die Löslichkeit des Polymers (A) bei 25 °C in 2-Methoxyethanol beträgt bevorzugt mindestens 30 Gew%, besonders bevorzugt mindestens 50 Gew%.

Geeignete Amine (B) weisen üblicherweise mindestens 2, bevorzugt 2 bis 6, besonders bevorzugt 2 bis 4 primäre und/oder sekundäre Amingruppen und in der Regel 2 bis 30 C-Atomen auf und können aliphatisch, cycloaliphatisch oder aromatisch sein.

Es stellt ein erfindungsgemäßes Merkmal dar, daß die Verbindungen (B) einen Anteil an tertiären Amingruppen, bezogen auf die Gesamtmenge an primären, sekundären und tertiären Amingruppen, von weniger als 20 % aufweisen, bevorzugt nicht mehr als 15%, besonders bevorzugt nicht mehr als 10%, ganz besonders bevorzugt nicht mehr als 5% und insbesondere keine tertiären Amingruppen aufweisen. Werden als Verbindungen (B) solche eingesetzt, die einen höheren Gehalt an tertiären Amingruppen aufweisen, so werden erfindungsgemäß solche Verbindungen ohne oder mit einem geringeren Gehalt an tertiären Amingruppen zugemischt, so daß die gesamte Mischung an Verbindungen (B) den erfindungsgemäßen niedrigen Gehalt an tertiären Amingruppen aufweist. Wenn (B) also aus einer Mischung aus mehreren Di- oder Polyaminen besteht, die jeweils mindestens zwei Amingruppen aufweisen, ausgewählt aus der Gruppe bestehend aus primären und sekundären Amingruppen, so bezieht sich der erfindungsgemäße niedrige Gehalt an tertiären Amingruppen auf die Mischung dieser Di- oder Polyamine.

Die Berechnung der Amingruppen sei am Beispiel von Tris-(2'-aminoethyl) amin illustriert: Diese Verbindung weist drei primäre und eine tertiäre Amingruppe auf. Somit ist der Anteil von tertiären Amingruppen an der Gesamtmenge von Amingruppen 25%. Dahingegen weist N,N,N',N'-Tetrakis (3'-aminopropyl)-1,4-diaminobutan vier primäre und zwei tertiäre Amingruppen auf, so daß der Anteil an tertiären Amingruppen ein Drittel beträgt.

Ohne an eine Erklärung gebunden sein zu wollen, wird vermutet, daß tertiäre Amine durch dreifache Hyperkonjugation bzw. +I-Effekt der Reste am Stickstoffatom eine hohe Elektronendichte am Stickstoffatom aufweisen, so daß ein oxidativer Angriff dort stärker bevorzugt ist, als wenn es sich nur um ein sekundäres oder primäres Amin handeln würde. Somit sind tertiäre Amine eher dazu geneigt, sich zu zersetzen und bei thermischer und/oder UV-Belastung einer Vergilbung zu verursachen als andere Amine.

Demgegenüber bilden die primären bzw. sekundären Amingruppen in der Komponente (B) durch Reaktion mit dem Carbonat (A) eine Amidstruktur, in der durch die elektronenziehende Carbonylgruppe die Elektronendichte am Stickstoffatom verringert ist. Demzufolge zeigen die so entstehenden Strukturen eine geringere Tendenz zur Vergilbung als die aus dem Stand der Technik bekannten Amine.

Es stellt eine bevorzugte Ausführungsform der vorliegenden Erfindung dar, ein Gemisch mehrerer Amine in den erfindungsgemäßen Beschichtungsmassen einzusetzen, beispielsweise zwei bis sechs, bevorzugt zwei bis vier, besonders bevorzugt zwei oder drei und insbesondere zwei. Mit einem Gemisch von Aminen ist es möglich, die Eigenschaften der erhaltenen Beschichtung zu bestimmen (siehe unten).

Das Di- oder Polyamin (B) ist bevorzugt ausgewählt aus der Gruppe bestehend aus linearen oder verzweigten C₂-C₈-(Cyclo)Alkylendiaminen (B1) und Polyetheraminen (B2).

Lineare oder verzweigte C₂-C₈-(Cyclo)Alkylendi- oder -polyamine (B1)

Als Diamine (B1) kommen bevorzugt solche der Formel R¹-NH-R²-NH-R³ in Betracht, worin R¹ und R³ unabhängig voneinander Wasserstoff oder einen Alkylrest, Cycloalkylrest, Arylrest oder Arylalkylrest mit 1 bis 20 C-Atomen bedeuten. Der (Cyclo)Alkylenest R² weist 2 bis 8 Kohlenstoffatome auf und kann linear, cyclisch oder gemischt aliphatisch und cyclisch sein.

Bevorzugte Diamine sind beispielsweise Ethylendiamin, die Propylendiamine (1,2-Diaminopropan and 1,3-Diaminopropan), N-Methyl-ethylendiamin, Tetramethylendiamin (1,4-Diaminobutan), N,N'-Dimethylethylendiamin, N-Ethylethylendiamin, 1,5-Diaminopentan, 1,3-Diamino-2,2-dimethylpropan, 1,3-Diamino-2,2-diethylpropan, 1,3-Bis(methylamino)propan, Hexamethylendiamin (1,6-Diaminohexan), 4,4'-Diaminodicyclohexylmethan, 1,2-, 1,3-, oder 1,4-Cyclohexylendiamin, 1,2-, 1,3-, oder 1,4-Bis(aminomethyl)cyclohexan, 1,5-Diamino-2-methylpentan, 3-(Propylamino)-propylamin, Isophorondiamin (IPDA), 3 (bzw. 4), 8 (bzw. 9)-Bis(aminomethyl)-tricyclo[5.2.1.0^{2.6}]decan-Isomerengemische, 2-Butyl-2-ethyl-1,5-pentamethylendiamin, 2,2,4- oder 2,4,4-Trimethyl-1,6-hexamethylendiamin, Piperazin, 2-Aminopropylcyclohexylamin, 3(4)-Aminomethyl-1-methylcyclohexylamin und 1,4-Diamino-4-methylpentan.

Bevorzugt sind Ethylendiamin, 1,3-Diamino-2,2-dimethylpropan, Hexamethylendiamin, Diaminodicyclohexylmethan, Cyclohexylendiamin, Isophorondiamin, 4,4'-Diaminodicyclohexylmethan und Bis(aminomethyl)cyclo-hexan.

Geeignete Amine mit drei oder mehr reaktiven primären und/oder sekundären Amingruppen sind beispielsweise Diethylentriamin, Dipropylentriamin, N1-(2-Amino-ethyl)-propan-1,3-diamin, Tris(aminoethyl)amin, Tris(aminopropyl)amin, Tris(aminohexyl)amin, Trisaminohexan, 4-Aminomethyl-1,8-octandiamin, Trisaminononan, oligomere Diaminodiphenylmethane (Polymer-MDA), Bis(aminoethyl)amin, Bis(aminopropyl)amin, Bis(aminobutyl)amin, Bis(amino-pentyl)amin, Bis(aminohexyl)amin, N-(2-Aminoethyl)propandiamin, N,N'-Bis(3-aminopropyl)ethylendiamin, N,N'-Bis(3-aminopropyl)butandiamin, N,N,N',N'-Tetra(3-aminopropyl)ethylendiamin, sowie Polyethylenimine, die formal durch Reaktion von Ethylenimin mit Aminen als Startmolekül erhältlich sind.

Bevorzugte Amine mit drei oder mehr reaktiven primären und/oder sekundären Amingruppen sind Diethylentriamin, Dipropylentriamin, Trisaminohexan, 4-Aminomethyl-1,8-octandiamin, Trisaminononan, Bis(aminoethyl)amin, Bis(aminopropyl)amin, Bis(aminobutyl)amin, Bis(aminopentyl)amin, Bis(aminohexyl)amin und N-(2-Aminoethyl)propandiamin.

### Polyetheramine (B2)

Unter Polyetheraminen werden erfindungsgemäß Amingruppen tragende Polyether verstanden.

Bevorzugte Polyetheramine sind die aminierten Produkte der Verbindungen der Formel (IIa) bis (IId), 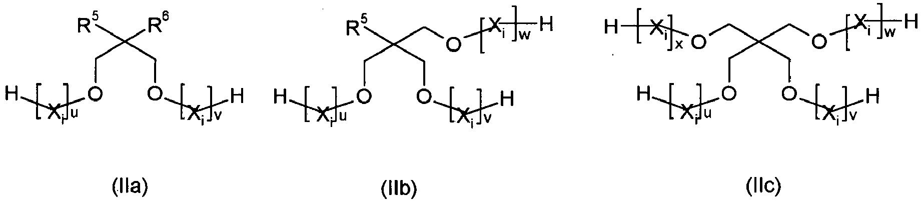 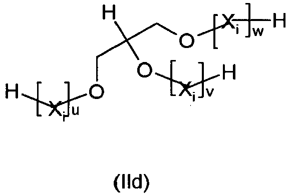 worin
R⁵ und R⁶ unabhängig voneinander Wasserstoff oder gegebenenfalls durch Aryl, Alkyl, Aryloxy, Alkyloxy, Heteroatome und/oder Heterocyclen substituiertes C₁ - C₁₈-Alkyl,
u, v, w, x unabhängig voneinander je für eine ganze Zahl von 1 bis 10, bevorzugt 1 bis 5 und besonders bevorzugt 1 bis 3 steht und
jedes Xᵢ für i = 1 bis u, 1 bis v, 1 bis w und 1 bis x unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hexadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Bevorzugt handelt es sich dabei um Aminierungsprodukte von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Solche Polyetheramine sind beispielsweise erhältlich von der Firma Huntsman Corporation unter den Namen

| | |
|---|---|
| Jeffamine® D-2000 | (aminiertes Polypropylenglykol (im statistischen Mittel 33 Propylenglykoleinheiten) mit einem Molgewicht von ca. 2000 g/mol), |
| Jeffamine® D-230 | (aminiertes Polypropylenglykol (im statistischen Mittel 2,5 Propylenglykoleinheiten) mit einem Molgewicht von ca. 230 g/mol), |
| Jeffamine® D-400 | (aminiertes Polypropylenglykol (im statistischen Mittel 6,1 Propylenglykoleinheiten) mit einem Molgewicht von ca. 430 g/mol), |
| Jeffamine® T-5000 | (aminiertes propoxyliertes Glycerin mit einem Molgewicht von ca. 5000 g/mol und einem Gehalt an primären Amingruppen von mindestens 97% bezogen auf den Gesamtgehalt an Amingruppen und einem Äquivalentgewicht an Amingruppen von 0,50 - 0,54 meq/g) und bevorzugt |
| Jeffamine® T-403 | (aminiertes fünf- bis sechsfach propoxyliertes Trimethylolpropan mit einem Gehalt an primären Amingruppen von mindestens 90% bezogen auf den Gesamtgehalt an Amingruppen und einem Äquivalentgewicht an Amingruppen von 6,2 - 6,5 meq/g). |

Als Aminierungprodukte werden solche Produkte verstanden, in denen die Hydroxygruppen überwiegend oder vollständig durch primäre und/oder sekundäre Amingruppen ersetzt sind. In der Regel sind mindestens 75% der Hydroxygruppen ersetzt, bevorzugt mindestens 85%, besonders bevorzugt mindestens 90% und ganz besonders bevorzugt mindestens 95%.

Unter den Aminen (B) die die Amine (B1) gegenüber den Aminen (B2) bevorzugt.

Durch die Auswahl der Amine (B) ist es möglich, die Eigenschaften der Beschichtung, die mit der jeweiligen Beschichtungsmasse erhalten wird, zu beeinflussen.

Als grobe Regel kann dabei davon ausgegangen werden, daß sterisch anspruchsvolle Amine (B) eine geringere Reaktivität und demzufolge eine erhöhte Topfzeit, d.h. die Zeit, in der die Beschichtungsmasse verarbeitbar ist und keine Viskositätsanstieg zeigt, aufweisen.

Sterisch anspruchsvolle Amine sind beispielsweise solche, in denen mindestens eine Amingruppe direkt an mindestens ein sekundäres oder tertiäres Kohlenstoffatom gebunden ist. Beispiele dafür sind Isophorondiamin, iso-Propyl- oder tert.-Butyl-substituierte Amine.

Andererseits bewirken Amine, die sterisch wenig anspruchsvoll sind und überwiegend, bevorzugt ausschließlich primäre Amingruppen aufweisen eine gute Haftung der Beschichtungen zum Substrat, insbesondere zu Metalluntergründen.

"Sterisch wenig anspruchsvoll" bedeutet dabei, daß die an den jeweiligen Amingruppen direkt gebundenen Kohlenstoffatome (α-Kohlenstoffatome) primär und die daran gebundenen Kohlenstoffatome (β-Kohlenstoffatome) primär oder sekundär sind, d.h. daß sich am α-Kohlenstoffatom kein und am β-Kohlenstoffatom höchstens ein Substituent befindet. Beispiele dafür sind 1,ω-Alkylendiamine und die endständigen primären Amingruppen von Polyethyleniminen.

Weiterhin kann durch die Wahl des Amins die Härte bzw. Elastizität der erhaltenen Beschichtung eingestellt werden.

Durch Einsatz einzelner, sterisch wenig anspruchsvoller Amine (B) kann eine Beschichtung mit erhöhter Elastizität erhalten werden, wohingegen sterisch anspruchsvolle Amine eine höhere Härte ergeben.

Überraschenderweise können mit Gemischen aus mindestens zwei Aminen (B), unabhängig von deren sterischem Anspruch, sehr harte Beschichtungen erhalten werden.

In den erfindungsgemäßen Zweikomponenten-Beschichtungsmassen beträgt das molare Verhältnis von primären und sekundären Amingruppen in (B) zu cyclischen Carbonatgrupen in (A) in der Regel von 5:1 bis 1:5, bevorzugt von 3:1 bis 1:3, besonders bevorzugt von 2:1 bis 1:2, ganz besonders bevorzugt von 1,5:1 bis 1:1,5 und insbesondere von 1,2:1 bis 1:1,2.

Die erfindungsgemäßen Zweikomponenten-Beschichtungsmassen können weiterhin als optionale Bestandteile mindestens ein Lösungsmittel, mindestens ein Pigment und/oder mindestens ein Additiv enthalten.

Als Lösungsmittel (C) kommen beispielsweise solche in Betracht, in denen die Komponenten (A) und (B) bei typischen Temperaturen der Anwendung löslich sind.

Z.B. finden Ketone, Ester, alkoxylierte Alkansäurealkylester, Ether, respektive Gemische der Lösungsmittel Verwendung.

Ester sind beispielsweise n-Butylacetat, Ethylacetat, 1-Methoxypropylacetat-2 und 2-Methoxyethylacetat.

Ether sind beispielsweise TH F, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, Diethylketon, Ethylmethylketon, Isobutylmethylketon, Methylamylketon und tert.-Butylmethylketon.

Bevorzugte Lösungsmittel sind n-Butylacetat, Ethylacetat, 1-Methoxypropylacetat-2, 2-Methoxyethylacetat, sowie deren Gemische.

Weitere mögliche Lösungsmittel sind Butylglykoldiacetat (Merck Schuchardt OHG), Butylglykolacetat (Merck Schuchardt OHG), Dipropylenglycoldimethylether (Proglyde® DM M, Sigma-Aldrich, Deutschland) und Propylencarbonat.

Weiterhin können nahezu alle gängigen Alkohole als Lösungsmittel eingesetzt werden, besonders bevorzugt sind hier 2-Methoxypropanol und 2-Methoxyethanol.

### Pigment (D)

Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.
Beispiele für Pigmente im eigentlichen Sinne umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepaßt werden. Beispielsweise können alle Pigmentkomponenten eines standardisierten Mischlacksystems zugrunde liegen.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g / 1000 g im Anwendungsmedium auf.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Als koloristisch inerte Füllstoffe sind alle Stoffe/Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im Folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Bevorzugte Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

### Additive (E)

Als weitere lacktypische Additive (E) können beispielsweise verwendet werden: Stabilisatoren, UV-Stabilisatoren wie UV-Absorber und geeignete Radikalfängern (insbesondere HALS-Verbindungen, Hindered Amin Light Stabilizer), Aktivatoren (Beschleuniger), Trockenmittel, Füllmittel, antistatische Agenzien, Flammschutzmittel, Verdicker, thixotrope Agenzien, oberflächenaktive Agenzien, Viskositätsmodifikatoren, Plastifizierer oder Chelatbildner. Bevorzugt sind UV-Stabilisatoren.

Stabilisatoren sind mindestens eine stabilisierend wirkende Verbindung, wobei mit "stabilisierend" die Eigenschaft bezeichnet ist, die Entwicklung einer Farbzahl und/oder der Viskosität der Beschichtungsmasse im Verlauf der Lagerung über einen gewissen Zeitraum gegenüber solchen entsprechenden Mischungen zu verringern, die keine stabilisierend wirkenden Verbindungen enthalten.

Geeignete UV-Absorber umfassen Oxanilide, Triazine und Benzotriazol (letztere erhältlich z.B. als Tinuvin® -Marken der BASF) und Benzophenone (z.B. Chimassorb® 81 der BASF). Bevorzugt sind z.B. 95 % Benzolpropansäure, 3-(2H-Benzotriazol-2-yl)-5-(1,1-dimethylethyl)-4-hydroxy-, C7-9-verzweigte und lineare Alkylester; 5 % 1-Methoxy-2-propylacetat (z.B. Tinuvin® 384) und α-[3-[3-(2H-Benzotriazol-2-yl)-5-(1,1-dimethylethyl)-4-hydroxyphenyl]-1-oxopropyl]-ω-hydroxypoly(oxo-1,2-ethanediyl) (z.B. Tinuvin® 1130), jeweils Produkte z.B. der BASF. DL-Alpha-Tocopherol, Tocopherol, Zimtsäurederivate und Cyanoacrylate können ebenfalls zu diesem Zweck eingesetzt werden.

Diese können allein oder zusammen mit geeigneten Radikalfängern, beispielsweise sterisch gehinderten Aminen (oft auch als HALS -oder HAS-Verbindungen bezeichnet; Hindered Amine (Light) Stabilizer) wie 2,2,6,6-Tetramethylpiperidin,2,6-Di-tert.-butylpiperidin oder deren Derivaten, z. B. Bis-(2,2,6,6-tetra-methyl-4-piperidyl)sebacinat, eingesetzt werden. Diese sind z.B. erhältlich als Tinuvin®- und Chimassorb®-Marken der BASF. Bevorzugt im gemeinsamen Einsatz mit Lewis-Säuren sind jedoch solche gehinderten Amine, die N-alkyliert sind, beispielsweise Bis (1,2,2,6,6-pentamethyl-4-piperidinyl)-[[3,5-bis(1,1-dimethylethyl)-4-hydroxyphenyl]-methyl]butylmalonat (z.B. Tinuvin® 144 der BASF); eine Mischung aus Bis(1,2,2,6,6-Pentamethyl-4-Piperidinyl)sebacat und Methyl(1,2,2,6,6-Pentamethyl-4-Piperidinyl)sebacat (z.B. Tinuvin® 292 der BASF); oder die N-(O-alkyliert) sind, wie z.B. Dekandisäure,bis(2,2,6,6-tetramethyl-1-(octyloxy)-4-piperidinyl)ester, Reaktionsprodukte mit 1,1-Dimethylethylhydroperoxyd und Oktan (z.B. Tinuvin® 123 der BASF).

UV-Stabilisatoren werden üblicherweise in Mengen von 0,1 bis 5,0 Gew.-%, bezogen auf die in der Zubereitung enthaltenen festen Komponenten, eingesetzt.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Die erfindungsgemäßen Beschichtungsmassen sind beispielsweise wie folgt zusammengesetzt:
(A) 30 bis 80 Gew%, bevorzugt 40 bis 70 Gew%, besonders bevorzugt 50-60 Gew%,
(B) 5 bis 20 Gew%, bevorzugt 10 bis 15 Gew%,
(C) 0 bis 60 Gew%, bevorzugt 10 bis 50 und besonders bevorzugt 20 bis 40 Gew%,
(D) 0 bis 30, bevorzugt 10-20 Gew%,
(E) 0-10 Gew%, bevorzugt 0 bis 5 Gew%,
mit der Maßgabe, dass die Summe dieser Komponenten immer 100 Gew% beträgt.

Die Beschichtungsmassen können optional als übliche Vernetzer Polyisocyanat und/oder Melamin-Formaldehyd-Harze enthalten, insbesondere dann, wenn es sich bei dem Polymer (A) um eine hydroxygrupenhaltiges handelt, d.h. wenn mindestens ein Monomer (a4) einpolymerisiert ist. Diese dienen jedoch lediglich zur Unterstützung der Härtung der Beschichtungsmasse, die erfindungsgemäß hauptsächlich durch Reaktion der Komponenten (A) und (B) erfolgt. Es stellt eine bevorzugte Ausführungsform dar, daß die erfindungsgemäßen Beschichtungsmasse keine wesentlichen Mengen an Polyisocyanaten und/oder Melamin-Formaldehyd-Harzen enthalten, d.h. jeweils weniger als 10 Gew%, bevorzugt weniger als 5 Gew% und besonders bevorzugt 0 Gew%.

Die erfindungsgemäßen Beschichtungsmassen werden durch Vermischung der Komponenten, insbesondere der Komponenten (A) und (B) kurz vor dem Aufbringen auf das Substrat hergestellt. Dabei können beispielsweise die Komponenten (A) und eine oder mehrere der anderen Komponenten (C), (D) und (E) bereits in Form einer Vormischung vorliegen, die dann mit der fehlenden Komponente (B) vermischt werden.

Unter "kurz vor dem Aufbringen" wird dabei verstanden, daß Vormischung und fehlende Komponente in einem Zeitraum vor dem Aufbringen auf das Substrat miteinander vermischt werden, innerhalb dessen eine problemlose Verarbeitbarkeit gewährleistet ist, d.h. die Beschichtungsmasse ist nach wie vor fließfähig und fehlerfrei applizierbar. Naturgemäß beträgt der Zeitraum weniger als die Gelzeit. Das Verarbeitungsfenster wird häufig dadurch definiert, daß sich die Viskosität gegenüber der Anfangsviskosität maximal verdoppeln darf. Eine Verarbeitung möglichst nahe an der ursprünglichen Viskosität ist bevorzugt.

Diese Mischung wird appliziert und anschließend wird bei Umgebungstemperatur bis 150 °C das Lackgemisch ausgehärtet. Ist ein Lösungsmittel (C) anwesend, so kann es bevorzugt sein, zumindest einen Teil des Lösungsmittels in einem Trocknungsschritt zu verdampfen oder abzulüften.

Je nach Temperatur und Reaktivität der Komponente (B) ist die Beschichtungsmasse nach 10 Minuten bis 6 Stunden ausgehärtet, bevorzugt 20 Minuten bis 4 Stunden, besonders bevorzugt 30 Minuten bis 3 Stunden und ganz besonders bevorzugt nach 1 bis 2 Stunden.

In einer bevorzugten Variante wird das Lackgemisch bei 20 bis 80 °C, besonders bevorzugt bis 60 °C ausgehärtet (z.B. für refinish-Anwendungen oder große Objekte, die sich schlecht in einen Ofen stellen lassen).

In einer anderen bevorzugten Anwendung wird das Lackgemisch bei 110-150 °C, bevorzugt bei 120-140 °C ausgehärtet (z.B. für OEM-Anwendungen).

Unter "Härtung" wird im Rahmen der vorliegenden Erfindung das Erzeugen einer klebfreien Beschichtung auf einem Substrat verstanden, indem man die auf das Substrat aufgetragene Beschichtungsmasse zumindest solange auf die oben angegebene Temperatur erwärmt, bis mindestens die gewünschte Klebfreiheit eingetreten ist.

Unter einer Beschichtungsmasse wird im Rahmen der vorliegenden Schrift eine Mischung zumindest der Komponenten (A) und (B) verstanden, die zum Beschichten mindestens eines Substrats zum Zwecke einer Ausbildung eines Films und, nach Härtung, einer klebfreien Beschichtung vorgesehen ist.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die optional enthaltenen flüchtigen Bestandteile der Beschichtungsmasse, optional unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen.

Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm (bezogen auf den Lack im Zustand in dem das Lösungsmittel aus dem Lack entfernt ist).

Weiterhin sind auch Substrate, beschichtet mit einer erfindungsgemäßen Beschichtungsmasse Gegenstand der vorliegenden Erfindung.

Besonders geeignet sind solche Beschichtungsmassen für Anwendungen, in denen eine besonders hohe Applikationssicherheit, Außenwitterungsbeständigkeit, Optik, Lösemittel-, Chemikalien- und Wasserfestigkeit gefordert werden.

Die erhaltenen zweikomponentigen Beschichtungsmassen und Lackformulierungen eignen sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können.

Derartige Beschichtungsmassen eignen sich als oder in Innen- oder Außenbeschichtungen, also solche Anwendungen, die dem Tageslicht ausgesetzt sind, bevorzugt von Gebäudeteilen, Beschichtungen auf (Groß-)Fahrzeugen und Flugzeugen und industriellen Anwendungen, Nutzfahrzeuge im landwirtschaftlichen und Baubereich, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, wie bei Parkdecks oder in Krankenhäusern in Automobillacken als OEM und refinish-Anwendung.

Insbesondere werden die erfindungsgemäßen Beschichtungsmassen als Klar-, Basis- und Decklacke(n), Primern und Füllern eingesetzt.

### Beispiele

### Polymer A

### Vorlage

| | |
|---|---|
| 150,630g | 1-Methoxy-2-propanol |

### Zulauf 1

| | |
|---|---|
| 98,440g | Glycerincarbonatacrylat |
| 56,250g | Methylmethacrylat |
| 42,200g | Styrol |
| 56,250g | n-Butylacrylat |
| 28,130g | n-Butylmethacrylat |

### Zulauf 2

| | |
|---|---|
| 11,250g | tert.-Butylperoctoat |
| 41,600g | 1-Methoxy-2-propanol |

### Zulauf 3

| | |
|---|---|
| 1,410g | tert.-Butylperoctoat |
| 17,750g | 1-Methoxy-2-propanol |

### Fahrweise

In einem 1L Polymerisationsgefäßes wurde 150,63g 1-Methoxy-2-propanol vorgelegt und unter Rühren und Stickstoffatmosphäre auf 120°C erhitzt. Bei 120°C wurde Zulauf 1 und Zulauf 2 gestartet und in 2 Stunden zudosiert. Anschließend wurde Zulauf 3 innerhalb von 0,25 Stunden zudosiert. Nach Beendigung der Zugabe wurde die resultierende Reaktionsmischung bei 120°C noch 120 Minuten gerührt. Man erhielt so eine Polymerlösung. Die so hergestellte Polymerlösung war klar und farblos. Sie hatte einen Feststoffgehalt von 48,4% und eine Viskosität von 432 mPas (Brookfield, Spindel 3/ 50 rpm, 20 °C). Der K-Wert, bestimmt nach Fikentscher, betrug 15,0 (1 %ig in Methoxypropanol, gemäß DIN EN ISO 1628-1). Der Glaspunkt wurde per DSC ermittelt und betrug 26°C gemäß DIN 51005.

### Polymer B

### Vorlage

| | |
|---|---|
| 150,630g | 1-M ethoxy-2-propanol |

### Zulauf 1

| | |
|---|---|
| 98,440g | Glycerincarbonatacrylat |
| 84,380g | 2-Ethyl-Hexylacrylat |
| 98,440g | Styrol |

### Zulauf 2

| | |
|---|---|
| 11,250g | tert.-Butylperoctoat |
| 141,600g | 1-Methoxy-2-propanol |

### Zulauf 3

| | |
|---|---|
| 1,410g | tert.-Butylperoctoat |
| 17,750g | 1-M ethoxy-2-propanol |

### Fahrweise

In einem 1 L Polymerisationsgefäßes wurde 150,63g 1-Methoxy-2-propanol vorgelegt und unter Rühren und Stickstoffatmosphäre auf 120°C erhitzt. Bei 120°C wurde Zulauf 1 und Zulauf 2 gestartet und in 2 Stunden zudosiert. Anschließend wurde Zulauf 3 innerhalb von 0,25 Stunden zudosiert. Nach Beendigung der Zugabe wurde die resultierende Reaktionsmischung bei 120°C noch 120 Minuten gerührt. Man erhielt so eine Polymerlösung. Die so hergestellte Polymerlösung war klar und farblos. Sie hatte einen Feststoffgehalt von 47,6% und eine Viskosität von 324 mPas (Brookfield, Spindel 3/ 50 rpm, 20 °C). Der K-Wert, bestimmt nach Fikentscher, betrug 15,6 (1%ig in Methoxypropanol, gemäß DIN EN ISO 1628-1). Der Glaspunkt wurde per DSC ermittelt und betrug 38°C gemäß DIN 51005.

### Polymer C

### Vorlage

| | |
|---|---|
| 150,630g | 1-M ethoxy-2-propanol |

### Zulauf 1

| | |
|---|---|
| 84,400g | Glycerincarbonatacrylat |
| 106,900g | Methylmethacrylat |
| 28,100g | Styrol |
| 61,900g | n-Butylacrylat |

### Zulauf 2

| | |
|---|---|
| 11,250g | tert.-Butylperoctoat |
| 141,600g | 1-Methoxy-2-propanol |

### Zulauf 3

| | |
|---|---|
| 1,410g | tert.-Butylperoctoat |
| 17,750g | 1-Methoxy-2-propanol |

### Fahrweise

In einem 1 L Polymerisationsgefäßes wurde 150,63g 1-Methoxy-2-propanol vorgelegt und unter Rühren und Stickstoffatmosphäre auf 120°C erhitzt. Bei 120°C wurde Zulauf 1 und Zulauf 2 gestartet und in 2 Stunden zudosiert. Anschließend wurde Zulauf 3 innerhalb von 0,25 Stunden zudosiert. Nach Beendigung der Zugabe wurde die resultierende Reaktionsmischung bei 120°C noch 120 Minuten gerührt. Man erhielt so eine Polymerlösung. Die so hergestellte Polymerlösung war klar und farblos. Sie hatte einen Feststoffgehalt von 48,4% und eine Viskosität von 548 mPas (Brookfield, Spindel 3/ 50 rpm, 20 °C). Der K-Wert, bestimmt nach Fikentscher, betrug 14,7 (1%ig in Methoxypropanol, gemäß DIN EN ISO 1628-1). Der Glaspunkt wurde per DSC ermittelt und betrug 22°C, gemäß DIN 51005.

### Anwendungsbeispiele

Versuchvorschrift für die Herstellung der Carbonat-Coatings auf den Substraten. Die Amine wurden nach den in Tabelle 1 angegebenen Gewichtsverhältnissen zusammengegeben und vermengt. Anschließend wurde wie in Tabelle 1 aufgeführt, das jeweilige ZweiKomponenten-System bei Raumtemperatur auf dem Rollbrett vermengt, bis eine einheitliche Mixtur entstanden war. Der noch nicht ausgehärtete Lack wurde zügig mit einem Kastenrakel auf das jeweilige Substrat (Glas zur Bestimmung der Härte und Bonderblech zur Bestimmung der Elastizität) aufgetragen und bei 100°C im Trockenofen für 30min gehärtet.

Die Ermittlung der Erichsen-Tiefung erfolgte analog DIN 53156. Hierzu wurde mittels eines Kastenrakels die jeweilige erfindungsgemäße Zubereitung mit einer Nassfilmdicke von 200 µm auf Bonder-Blech 132 aufgebracht. Zur Aushärtung wurde in der oben beschriebenen Weise gehärtet. Anschließend wurde die Erichsen-Tiefung durch Eindrücken einer Metallkugel in die nicht beschichtete Seite des Blechs bestimmt. Hohe Werte bedeuten hohe Flexibilität.

Die Pendeldämpfung erfolgte gemäß DIN 53157, hohe Werte bedeuten hohe Härte.

Folgende Amine wurden eingesetzt:

| Amin Nr: | |
|---|---|
| 1 | Tris(2-aminoethyl)amin |
| 2 | Diethylentriamin |
| 3 | Dipropylentriamin |
| 4 | 2,2-Dimethylpropylendiamin |
| 5 | 3-(2-(Aminoethylamino)propylamin) |
| 6 | 4,4'-Methylen-bis-cyclohexylamin |
| 7 | Isophorondiamin |
| 8 | 1 + 7 = 50 Gew% : 50 Gew% |
| 9 | 2 + 7 = 50 Gew% : 50 Gew% |
| 10 | 1 + 4 + 7 = 33,3Gew% : 33,3Gew% : 33,3Gew% |
| 11 | 2 + 4 + 7 = 33,3Gew% : 33,3Gew% : 33,3Gew% |
| 12 | Polyetheramin T-403 |

Polyetheramin T-403: aminiertes, fünf- bis sechsfach propoxyliertes Trimethylolpropan mit einem mittleren Molgewicht von ca. 440 g/mol, erhältlich von BASF SE, Ludwigshafen.

### Mischungsverhältnisse (Tabelle 1)

| Polymer | Menge [g] | Amin Nr. | Menge [g] |
|---|---|---|---|
| A | 17,3158 | 1 | 0,8307 |
| A | 17,2986 | 2 | 0,8781 |
| A | 17,5521 | 3 | 1,1333 |
| A | 17,3787 | 4 | 0,8737 |
| A | 17,6251 | 5 | 1,0164 |
| A | 10,4971 | 6 | 1,0866 |
| A | 10,6301 | 7 | 0,8907 |
| A | 5,0558 | 8 | 0,3331 |
| A | 5,0477 | 9 | 0,3396 |
| A | 5,0532 | 10 | 0,3066 |
| A | 5,0463 | 11 | 0,3109 |
| A | 5,1288 | 12 | 0,7403 |
| B | 17,4673 | 1 | 0,8171 |
| B | 17,2991 | 3 | 1,0892 |
| B | 17,7409 | 4 | 0,8698 |
| B | 17,428 | 5 | 0,9801 |
| B | 10,7132 | 6 | 1,0814 |
| B | 10,5294 | 7 | 0,8604 |
| B | 5,3968 | 8 | 0,3467 |
| B | 5,1877 | 9 | 0,3404 |
| B | 5,0465 | 10 | 0,2986 |
| B | 5,1022 | 11 | 0,3066 |
| B | 5,0823 | 12 | 0,7154 |
| C | 17,3008 | 1 | 0,7114 |
| C | 17,3901 | 3 | 0,9624 |
| C | 17,7477 | 5 | 0,8773 |
| C | 10,5489 | 6 | 0,9359 |
| C | 10,8428 | 7 | 0,7788 |
| C | 5,0847 | 8 | 0,2871 |
| C | 5,0621 | 9 | 0,2919 |
| C | 5,0711 | 10 | 0,2638 |
| C | 5,0590 | 11 | 0,2672 |
| C | 5,2086 | 12 | 0,6444 |

### Ergebnisse der Beschichtungsmassen: Pendelhärte und Erichsen-Tiefung

| Polymer | Amin Nr. | Dicke [µm] | Pendelhärte | | Erichsen-Tiefung | |
|---|---|---|---|---|---|---|
| A | 1* | 66,3 | 148 | 144 | 7,7 | 7,8 |
| A | 2 | 83,1 | 119 | 120 | 8,1 | 8,1 |
| A | 3 | 65,3 | 101 | 116 | 8,0 | 8,0 |
| A | 4 | 83,3 | 160 | 155 | 8,2 | 8,3 |
| A | 5 | 80,1 | 120 | 123 | 8,1 | 8,1 |
| A | 6 | 63,57 | 193 | 195 | 0,2 | 0,2 |
| A | 7 | 70,45 | 196 | 196 | 0,4 | 0,3 |
| A | 8 | 42,97 | 174 | 181 | 8,1 | 8,4 |
| A | 9 | 37,43 | 197 | 195 | 0,8 | 0,8 |
| A | 10 | 36,92 | 196 | 200 | 8,1 | 8,5 |
| A | 10 (85%) | 34,22 | 167 | 168 | 7,0 | 6,7 |
| A | 11 | 38,04 | 197 | 199 | 0,9 | 0,9 |
| A | 12 | 31,57 | 15 | 15 | 9,0 | 9,0 |
| B | 1* | 62,8 | 144 | 143 | 8,1 | 8,2 |
| B | 3 | 69,4 | 125 | 122 | 9,0 | 8,4 |
| B | 4 | 76,8 | 144 | 144 | 8,9 | 8,8 |
| B | 5 | 83,1 | 120 | 125 | 8,9 | 8,5 |
| B | 6 | 74,13 | 171 | 175 | 0,3 | 0,3 |
| B | 7 | 62,85 | 169 | 171 | 0,3 | 0,3 |
| B | 8 | 37,79 | 181 | 183 | 8,4 | 8,4 |
| B | 9 | 43,50 | 172 | 176 | 8,2 | 8,3 |
| B | 10 | 36,44 | 186 | 186 | 8,5 | 8,6 |
| B | 10 (85%) | 42,66 | 154 | 150 | 8,7 | 8,6 |
| B | 11 | 42,76 | 172 | 176 | 8,7 | 8,9 |
| B | 11 (85%) | 35,32 | 109 | 102 | 8,8 | 8,9 |
| B | 12 | 29,09 | <14 | <14 | >9 | >9 |
| C | 1* | 67,1 | 150 | 154 | 8,0 | 8,0 |
| C | 3 | 69,8 | 106 | 119 | 8,4 | 8,4 |
| C | 5 | 85,3 | 85 | 97 | 8,6 | 8,6 |
| C | 6 | 69,87 | 197 | 196 | 0,2 | 0,2 |
| C | 7 | 26,34 | 199 | 197 | 9,3 | 9,2 |
| C | 8 | 35,79 | 192 | 183 | 2,1 | 1,0 |
| C | 9 | 33,78 | 178 | 193 | 0,7 | 0,6 |
| C | 10 | 31,73 | 199 | 200 | 0,6 | 0,6 |
| C | 10 (85%) | 36,54 | 179 | 179 | 2,0 | 1,9 |
| C | 11 | 35,85 | 192 | 199 | 0,6 | 0,5 |
| C | 12 | 30,86 | 21 | 21 | >9 | >9 |

| | | | | | | |
|---|---|---|---|---|---|---|
| * Amin Nr. 1 (Tris(2-aminoethyl)amin) als Vergleich | | | | | | |

Man sieht an den Ergebnissen, daß die cyclischen Amine Nr. 6 und 7 gegenüber dem Vergleichsamin Nr. 1 Beschichtungen mit einer deutlich höheren Härte ergeben, wohingegen die Flexibilität zurückgeht.

Durch Mischungen von Aminen kann es möglich sein, gegenüber dem Vergleich sowohl Härte als auch Elastizität zu erhöhen, siehe die Amingemische 8 oder 10 im Vergleich zu Amin Nr. 1.

## Patentansprüche

1. Zweikomponenten-Beschichtungsmassen, enthaltend
- mindestens ein durch radikalische Copolymerisierung erhältliches Copolymer (A), das mindestens eine cyclische Carbonatgruppe trägt,
- mindestens ein Di- oder Polyamin (B), welches mindestens zwei Amingruppen aufweist, ausgewählt aus der Gruppe bestehend aus primären und sekundären Amingruppen,
- optional mindestens ein Lösungsmittel (C),
- optional mindestens ein Pigment (D), und
- optional mindestens ein Additiv (E),
**dadurch gekennzeichnet, daß** die Verbindung (B) einen Anteil an tertiären Amingruppen, bezogen auf die Gesamtmenge an primären, sekundären und tertiären Amingruppen, von weniger als 20 % aufweist.

2. Beschichtungsmassen gemäß Anspruch 1, **dadurch gekennzeichnet, daß** das Copolymer (A) erhältlich ist durch radikalische Polymerisation eines Monomerengemisches aus
(a1) mindestens einem mindestens eine cyclische Carbonatgruppe aufweisenden (Meth)acrylat,
(a2) mindestens einem (Cyclo)alkyl(meth)acrylat,
(a3) mindestens einem vinylaromatischen Monomer,
(a4) optional mindestens einem Hydroxyalkyl(meth)acrylat, und
(a5) optional mindestens einem säuregruppenhaltigen Monomer.

3. Beschichtungsmassen gemäß Anspruch 2, **dadurch gekennzeichnet, daß** das Monomer (a1) ausgewählt ist aus der Gruppe bestehend aus (2-Oxo-1,3-dioxolan-4-yl)methyl acrylat und (2-Oxo-1,3-dioxolan-4-yl)methyl methacrylat.

4. Beschichtungsmassen gemäß Anspruch 2 oder 3, **dadurch gekennzeichnet, daß** das Monomer (a2) ausgewählt ist aus der Gruppe bestehend aus Methylacrylat, Methylmethacrylat, Ethylacrylat, n-Butylacrylat, tert.-Butylacrylat und 2-Ethylhexylacrylat.

5. Beschichtungsmassen gemäß einem der Ansprüche 2 bis 4, **dadurch gekennzeichnet, daß** das Monomer (a3) ausgewählt ist aus der Gruppe bestehend aus Styrol und alpha-Methylstyrol.

6. Beschichtungsmassen gemäß einem der vorstehenden Ansprüche, **dadurch gekennzeichnet, daß** das Copolymer (A) eine Glasübergangstemperatur (Tg) von 10 bis 100 °C aufweist.

7. Beschichtungsmassen gemäß einem der vorstehenden Ansprüche, **dadurch gekennzeichnet, daß** das Di- oder Polyamin (B) ausgewählt ist aus der Gruppe bestehend aus linearen oder verzweigten C₂-C₈-(Cyclo)Alkylendiaminen (B1) und Polyetheraminen (B2).

8. Beschichtungsmassen gemäß einem der vorstehenden Ansprüche, **dadurch gekennzeichnet, daß** das Di- oder Polyamin (B) ausgewählt ist aus der Gruppe bestehend aus Ethylendiamin, 1,3-Diamino-2,2-dimethylpropan, Hexamethylendiamin, Diaminodicyclohexylmethan, Cyclohexylendiamin, Isophorondiamin und Bis(aminomethyl)cyclo-hexan.

9. Beschichtungsmassen gemäß einem der Ansprüche 1 bis 7, **dadurch gekennzeichnet, daß** es sich bei dem Di- oder Polyamin (B) um ein Aminierungsprodukte von ein- bis zwanzigfach ethoxyliertem, propoxyliertem oder gemischt ethoxyliertem und propoxyliertem Neopentylglykol, Trimethylolpropan, Trimethylolethan oder Pentaerythrit handelt.

10. Beschichtungsmassen gemäß einem der vorstehenden Ansprüche, **dadurch gekennzeichnet, daß** das molare Verhältnis von primären und sekundären Amingruppen in (B) zu cyclischen Carbonatgrupen in (A) von 5:1 bis 1:5 beträgt.

11. Verfahren zur Herstellung von Beschichtungsmassen gemäß einem der vorstehenden Ansprüche, **dadurch gekennzeichnet, daß** man die Komponenten (A) und (B) kurz vor dem Aufbringen auf das Substrat miteinander vermischt.

12. Verfahren zum Beschichten von Substraten, **dadurch gekennzeichnet, daß** man das Substrat mit einer Beschichtungsmasse gemäß einem der Ansprüche 1 bis 10 beschichtet und anschließend bei Umgebungstemperatur bis 150 °C thermisch behandelt.

13. Verfahren gemäß Anspruch 12, **dadurch gekennzeichnet, daß** das Substrat ausgewählt ist aus der Gruppe bestehend aus Holz, Holzfurnier, Papier, Pappe, Karton, Textil, Folie, Leder, Vlies, Kunststoffoberflächen, Glas, Keramik, mineralischen Baustoffen und Metallen, die jeweils optional vorbeschichtet sein können.

14. Verwendung von Beschichtungsmassen gemäß einem der Ansprüche 1 bis 10 zur Beschichtung von Substraten.

## Claims

1. A two-component coating composition comprising
- at least one copolymer (A) which is obtainable by radical copolymerization and carries at least one cyclic carbonate group,
- at least one diamine or polyamine (B) which has at least two amine groups selected from the group consisting of primary and secondary amine groups,
- optionally at least one solvent (C),
- optionally at least one pigment (D), and
- optionally at least one additive (E),
wherein the compound (B) has a fraction of tertiary amine groups, based on the total amount of primary, secondary, and tertiary amine groups, of less than 20%.

2. The coating composition according to claim 1, wherein the copolymer (A) is obtainable by radical polymerization of a monomer mixture of (a1) at least one (meth)acrylate containing at least one cyclic carbonate group, (a2) at least one (cyclo)alkyl (meth)acrylate, (a3) at least one vinylaromatic monomer, (a4) optionally at least one hydroxyalkyl (meth)acrylate, and (a5) optionally at least one acid-group-containing monomer.

3. The coating composition according to claim 2, wherein the monomer (a1) is selected from the group consisting of (2-oxo-1,3-dioxolan-4-yl)methyl acrylate and (2-oxo-1,3-dioxolan-4-yl)methyl methacrylate.

4. The coating composition according to claim 2 or 3, wherein the monomer (a2) is selected from the group consisting of methyl acrylate, methyl methacrylate, ethyl acrylate, n-butyl acrylate, tert-butyl acrylate, and 2-ethylhexyl acrylate.

5. The coating composition according to any of claims 2 to 4, wherein the monomer (a3) is selected from the group consisting of styrene and alpha-methylstyrene.

6. The coating composition according to any of the preceding claims, wherein the copolymer (A) has a glass transition temperature (Tg) of 10 to 100°C.

7. The coating composition according to any of the preceding claims, wherein the diamine or polyamine (B) is selected from the group consisting of linear or branched C2-C8 (cyclo)alkylenediamines (B1) and polyetheramines (B2).

8. The coating composition according to any of the preceding claims, wherein the diamine or polyamine (B) is selected from the group consisting of ethylenediamine, 1,3-diamino-2,2-dimethylpropane, hexamethylenediamine, diaminodicyclohexylmethane, cyclohexylenediamine, isophoronediamine, and bis(aminomethyl)cyclohexane.

9. The coating composition according to any of claims 1 to 7, wherein the diamine or polyamine (B) is an amination product of singly to vigintuply ethoxylated, propoxylated or mixedly ethoxylated and propoxylated neopentylglycol, trimethylolpropane, trimethylolethane or pentaerythritol.

10. The coating composition according to any of the preceding claims, wherein the molar ratio of primary and secondary amino groups in (B) to cyclic carbonate groups in (A) is from 5:1 to 1:5.

11. A process for preparing a coating composition according to any of the preceding claims, which comprises mixing components (A) and (B) with one another shortly before application to the substrate.

12. A method for coating a substrate, which comprises coating the substrate with a coating composition according to any of claims 1 to 10 and subjecting it subsequently to thermal treatment at ambient temperature up to 150°C.

13. The method according to claim 12, wherein the substrate is selected from the group consisting of wood, wood veneer, paper, paperboard, cardboard, textile, film, leather, nonwoven, plastics surfaces, glass, ceramic, mineral building materials, and metals, each of which may optionally have been precoated.

14. The use of a coating composition according to any of claims 1 to 10 for coating a substrate.

## Revendications

1. Masses de revêtement à deux composants, contenant
- au moins un copolymère (A) pouvant être obtenu par copolymérisation par voie radicalaire, qui porte au moins un groupe carbonate cyclique,
- au moins une diamine ou polyamine (B), qui présente au moins deux groupes amine, choisis dans le groupe constitué par les groupes amine primaire et secondaire,
- éventuellement au moins un solvant (C),
- éventuellement au moins un pigment (D) et
- éventuellement au moins un additif (E), **caractérisées en ce que** le composé (B) présente une proportion de groupes amine tertiaire, par rapport à la quantité totale de groupes amine primaire, secondaire et tertiaire, inférieure à 20%.

2. Masses de revêtement selon la revendication 1, **caractérisées en ce que** le copolymère
(A) peut être obtenu par polymérisation par voie radicalaire d'un mélange de monomères constitué par
(a1) au moins un (méth)acrylate présentant au moins un groupe carbonate cyclique,
(a2) au moins un (méth)acrylate de (cyclo)alkyle,
(a3) au moins un monomère aromatique de vinyle,
(a4) éventuellement au moins un (méth)acrylate d'hydroxyalkyle et
(a5) éventuellement au moins un monomère contenant des groupes acides.

3. Masses de revêtement selon la revendication 2, **caractérisées en ce que** le monomère (a1) est choisi dans le groupe constitué par l'acrylate de (2-oxo-1,3-dioxolan-4-yl)méthyle et le méthacrylate de (2-oxo-1,3-dioxolan-4-yl)méthyle.

4. Masses de revêtement selon la revendication 2 ou 3, **caractérisées en ce que** le monomère (a2) est choisi dans le groupe constitué par l'acrylate de méthyle, le méthacrylate de méthyle, l'acrylate d'éthyle, l'acrylate de n-butyle, l'acrylate de tert-butyle et l'acrylate de 2-éthylhexyle.

5. Masses de revêtement selon l'une quelconque des revendications 2 à 4, **caractérisées en ce que** le monomère (a3) est choisi dans le groupe constitué par le styrène et l'alpha-méthylstyrène.

6. Masses de revêtement selon l'une quelconque des revendications précédentes, **caractérisées en ce que** le copolymère (A) présente une température de transition vitreuse (Tg) de 10 à 100°C.

7. Masses de revêtement selon l'une quelconque des revendications précédentes, **caractérisées en ce que** la diamine ou la polyamine (B) est choisie dans le groupe constitué par les C₂-C₈-(cyclo)alkylènediamines (B1) et les polyétheramines (B2) linéaires ou ramifiées.

8. Masses de revêtement selon l'une quelconque des revendications précédentes, **caractérisées en ce que** la diamine ou la polyamine (B) est choisie dans le groupe constitué par l'éthylènediamine, le 1,3-diamino-2,2-diméthylpropane, l'hexaméthylènediamine, le diaminodicyclohexylméthane, la cyclohexylènediamine, l'isophoronediamine et le bis(aminométhyl)cyclohexane.

9. Masses de revêtement selon l'une quelconque des revendications 1 à 7, **caractérisées en ce qu'**il s'agit, pour la diamine ou la polyamine (B), d'un produit d'amination de néopentylglycol, de triméthylolpropane, de triméthyloléthane ou de pentaérythritol un à vingt fois éthoxylé, propoxylé ou éthoxylé/propoxylé mixte.

10. Masses de revêtement selon l'une quelconque des revendications précédentes, **caractérisées en ce que** le rapport molaire de groupes amine primaire et secondaire dans (B) aux groupes carbonate cyclique dans (A) est de 5:1 à 1:5.

11. Procédé pour la préparation de masses de revêtement selon l'une quelconque des revendications précédentes, **caractérisé en ce qu'**on mélange les composants (A) et (B) l'un avec l'autre peu de temps avant l'application sur le substrat.

12. Procédé pour le revêtement de substrats, **caractérisé en ce qu'**on revêt le substrat par une masse de revêtement selon l'une quelconque des revendications 1 à 10, puis on le traite thermiquement à la température ambiante jusqu'à 150°C.

13. Procédé selon la revendication 12, **caractérisé en ce que** le substrat est choisi dans le groupe constitué par le bois, les placages en bois, le papier, le carton-pâte, le carton, le textile, les films, le cuir, les non-tissés, les surfaces en matériau synthétique, le verre, la céramique, les matériaux de construction minéraux et les métaux, qui peuvent à chaque fois éventuellement être revêtus au préalable.

14. Utilisation des masses de revêtement selon l'une quelconque des revendications 1 à 10 pour le revêtement de substrats.
